(19) Europäisches Patentamt
European Patent Office
Office européen des brevets

(11) **EP 2 536 605 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**22.06.2022 Patentblatt 2022/25**

(45) Hinweis auf die Patenterteilung:
**10.08.2016 Patentblatt 2016/32**

(21) Anmeldenummer: **10795661.7**

(22) Anmeldetag: **15.12.2010**

(51) Internationale Patentklassifikation (IPC):
**B60T 1/10** (2006.01)   **B60T 7/04** (2006.01)
**B60T 8/40** (2006.01)   **B60T 13/74** (2006.01)

(52) Gemeinsame Patentklassifikation (CPC):
**B60T 7/042; B60T 1/10; B60T 8/4077; B60T 8/4872; B60T 13/662; B60T 13/745**

(86) Internationale Anmeldenummer:
**PCT/EP2010/069743**

(87) Internationale Veröffentlichungsnummer:
**WO 2011/098178 (18.08.2011 Gazette 2011/33)**

(54) **BREMSKRAFTVERSTÄRKER SOWIE VERFAHREN UND VORRICHTUNG ZU DESSEN BETRIEB**

BRAKE BOOSTER, AND METHOD AND DEVICE FOR THE OPERATION THEREOF

SERVOFREIN AINSI QUE PROCÉDÉ ET DISPOSITIF DE FONCTIONNEMENT CORRESPONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2010 DE 102010001939**

(43) Veröffentlichungstag der Anmeldung:
**26.12.2012 Patentblatt 2012/52**

(73) Patentinhaber: **Robert Bosch GmbH**
**70442 Stuttgart (DE)**

(72) Erfinder:
• **WEIBERLE, Reinhard**
  **71665 Vaihingen/Enz (DE)**
• **JAHNZ, Timo**
  **74354 Besigheim (DE)**
• **MAYER, Jochen**
  **70195 Stuttgart-Botnang (DE)**
• **KOLARSKY, Jens**
  **74321 Bietigheim/Bissingen (DE)**

(56) Entgegenhaltungen:
EP-A1- 1 808 347       WO-A1-2010/006996
WO-A1-2010/006996      WO-A1-2011/092148
CN-A- 1 872 599        DE-A1- 10 319 663
DE-A1- 19 515 848      DE-A1- 19 817 589
DE-A1-102007 030 441   US-A- 6 007 160
US-A1- 2009 045 672    US-A1- 2009 115 242
US-A1- 2009 261 649

EP 2 536 605 B2

**Beschreibung**

Stand der Technik

In einem hydraulischen Bremssystem eines Kraftfahrzeugs wird meist ein Bremspedal durch den Fahrer betätigt und verschiebt, gegebenenfalls mit Unterstützung eines Bremskraftverstärkers, mechanisch einen Kolben in einem Hauptbremszylinder, an dessen Ausgängen ein Hydraulikaggregat angeschlossen ist. Dadurch wird Bremsflüssigkeit in das Hydraulikaggregat (z.B. ESP oder ABS) eingebracht und zu den Radbremszylindern geleitet. Dort erhöht das eingebrachte Volumen den Bremsdruck und führt durch Anpressen der Bremsbeläge an die Bremsscheiben zu einer Bremswirkung. Bekannt sind unterschiedliche Ausgestaltungen von Bremskraftverstärkern, beispielsweise pneumatische, hydraulische oder auch elektromechanische Bremskraftverstärker.

Ein elektromechanischer Bremskraftverstärkers ist beispielsweise aus der DE 102007016136 A1 bekannt. Dort wird aus einer berechneten von einem Fahrer aufgebrachten Pedalkraft die zugehörige zusätzliche Bremskraft zur Einstellung einer definierten Bremskraftverstärkung berechnet.

In der DE 199 50 029 A1 ist ein Verfahren und eine Vorrichtung zur Bremskraftverstärkung in einem Fahrzeug vorgeschlagen. Dabei wird der Verstärkungsfaktor in wenigstens einer Betriebssituation, vorzugsweise bei Stillstand des Fahrzeugs, gegenüber dem Verstärkungsfaktor außerhalb dieser Situation verändert, vorzugsweise reduziert.

Das Dokument US 6 007 160 beschreibt eine Methode um einen elektrohydraulischen Bremskraftverstärker dergestalt anzusteuern, dass ein erwünschtes Pedalgefühl vermittelt wird. Die Methode beruht darauf, die Bewegung des Bremspedals zu ermitteln und einen Steuerpuls auszugeben, der eine Druckbeaufschlagung eines Verstärkerkolbens hervorruft.

Die US Schrift US 2009/0261649 A1 befasst sich mit einem Bremskraftverstärker dessen Pedalgefühl dadurch vermittelt wird, dass eine Drucksteuereinrichtung zwischen Bremskraftverstärker und Radbremszylinder angeordnet ist.

Die US Offenlegungsschrift US 2011/0178687 A1 befasst sich mit einem Bremskraftverstärker, der einen einstellbaren Jump-In Bereich aufweist, indem der Gleichgewichtswert des Bremskraftverstärkers durch Ansteuerung verstellt wird.

Die Offenlegungsschrift DE 103 19 663 betrifft eine Bremsanlage für ein Kraftfahrzeug, umfassend ein hydraulisches Betriebsbremssystem und ein elektrisches Betriebsbremssystem mit Radbremsen, die bei Betätigung eines Bremspedals mit Bremsdruck beaufschlagt werden. Um das Bremsverhalten des Fahrzeugs bei einer Änderung der Bremskraftverteilung zwischen dem hydraulischen und dem elektrischen Betriebsbremssystem im wesentlichen unverändert zu halten, wird vorgeschlagen, eine Steuereinrichtung vorzusehen, die in der Lage ist, die Bremskraftverteilung zu variieren und das hydraulische Betriebsbremssystem mit einem Bremsdruckmodulator auszustatten, der von der Steuereinrichtung angesteuert wird und in Abhängigkeit von der Ansteuerung durch die Steuereinrichtung eine variable Bremskraftverstärkung bewirken kann.

Pedalwegsimulatoren sind zum Beispiel aus der Schrift 'Kraftfahrtechnisches Taschenbuch' (25. Auflage, BOSCH, Vieweg Verlag ISBN 3528238763) bekannt. Bei einer elektrohydraulischen Bremse sind sie Teil einer Betätigungseinheit und ermöglichen es, einen geeigneten Kraft-Weg-Verlauf und eine angemessene Dämpfung des Bremspedals zu realisieren. Somit erhält der Fahrer beim Bremsen mit einer elektrohydraulischen Bremse das gleiche Bremsgefühl wie bei einem sehr gut ausgelegten konventionellen Bremssystem.

Offenbarung der Erfindung

Die vorliegende Erfindung schafft ein Verfahren zum Betreiben eines regelbaren Bremskraftverstärkers mit den Merkmalen des Anspruchs 1 und eine Vorrichtung zur Ansteuerung eines regelbaren Bremskraftverstärkers mit den Merkmalen des Anspruchs 12. In vorteilhafter Weise ist es dadurch möglich die Pedalkraft, also eine Kraft, die der Fahrer aufbringen muss

um das Pedal an einer Betätigungsposition zu halten, einzustellen. Ein Fahrer erwartet bei einer Betätigung des Bremspedals stets eine der Betätigungsposition entsprechende Pedalkraft, man spricht auch von einer Pedalcharakteristik. Durch das erfindungsgemäße Verfahren kann in vorteilhafter Manier die Pedalcharakteristik mittels des regelbaren Bremskraftverstärker eingestellt werden. Der Begriff regelbar kann in diesem Zusammenhang auch den Begriff steuerbar umfassen. Bei der vorliegenden Erfindung ist es sowohl denkbar den Bremskraftverstärker zu steuern, als auch diesen anhand von für die Regelung relevanten Größen zu regeln.

In vorteilhafter Weiterbildung weist der regelbare Bremskraftverstärker einen Verstärkerkörper und ein Ausgangselement auf. Über das Ausgangselement wird ein Hauptzylinder mit einer Kraft beaufschlagt. Der Hauptzylinder ist ein Kraft-Druck-Umwandlungselement, wie es in vielen hydraulischen Bremssystemen zu finden ist, beispielsweise in Form eines Hauptbremszylinders, oder auch eines Tandem-Hauptbremszylinders. Der regelbare Bremskraftverstärker im erfindungsgemäßen Verfahren weist ein erstes elastisches Element sowie ein zweites elastisches Element auf. Das erste elastische Element ist zwischen dem Eingangselement und dem Verstärkerkörper angeordnet. Im erfindungsgemäßen Verfahren werden die jeweiligen Wirkungen des ersten und/oder des zweiten elastischen Elements in Bezug auf die Pedalkraft berücksichtigt, da die Pedalkraft von der Wirkung des ersten und/oder des zweiten elastischen Elements abhängt. Das erste und/oder zweite elastische Element muss in Bezug auf die Pedalkraft berücksichtigt werden, da sie einen Beitrag zur Pedalkraft leisten. Wird bei einer Betätigung der Bremsanlage über das Eingangselement das erste und/oder zweite elastische Element deformiert 15 oder komprimiert, so führt das zu einer rückwirkenden Kraft entgegengesetzt der Deformations- oder Kompressionsrichtung des elastischen Elements. Die Pedalkraft wird dann unter Nutzung wenigstens einer Information bezüglich der ersten und/oder zweiten Wirkung eingestellt. Unter dieser Information sind eine oder mehrere Größe(n) zu verstehen, welche die vorliegende Wirkung des ersten und/oder zweiten elastischen Elements repräsentieren. Die Information kann dabei anhand von Sensoren oder Betriebsgrößen des Bremskraftverstärkers und/oder des hydraulischen Bremssystems ermittelt werden. Als nicht einschränkend zu verstehendes Beispiels können hier beispielsweise Federkompression und Federkonstante verstanden werden. Daraus lässt sich eine Kraft bestimmen, diese Kraft ist die vorliegende Wirkung des elastischen Elements, also der Feder.

Diese Information bezüglich der ersten und/oder zweiten Wirkung kann dann zur Einstellung der Pedalkraft durch Betreiben des Bremskraftverstärkers genutzt werden. Die Information kann mittels eines Steuergerätes zur weiteren Verwendung im erfindungsgemäßen Verfahren weiterverarbeitet werden.

Des Weiteren ist vorgesehen, dass der Bremskraftverstärker im erfindungsgemäßen Verfahren einen Leerweg zwischen Eingangselement und dem Ausgangselement aufweist, wobei dieser Leerweg von einem Betriebsmodus des Bremskraftverstärkers abhängt. Der jeweils vorliegende Betriebsmodus des Bremskraftverstärkers lässt sich daran festmachen, ob der Leerweg vorhanden oder überwunden ist. Ist der Leerweg vorhanden so wird der Bremskraftverstärker gemäß seiner ursprünglichen Kennlinie betrieben. In diesem Fall hängt die Pedalkraft alleine von der Wirkung des ersten elastischen Elements ab. Insbesondere Hängt die Pedalkraft gemäß dem im Anspruch angegebenen Zusammenhang mit einer Kraft F_spring1 zusammen. Auf diese Weise kann, bei geeigneter Dimensionierung des elastischen Elements / der Feder welche die bei vorhandenem Leerweg die alleinige Rückwirkung, also die Pedalkraft, erzeugt ein Verhalten nachgebildet werden, welches der Fahrer beispielsweise von einem pneumatischen Bremskraftverstärker aus dem Stand der Technik her kennt. Bei einem vorhandenen Leerweg spürt der Fahrer auch lediglich Federkräfte. Dieser Betriebsmodus und die in diesem Betriebsmodus vorliegende Pedalcharakteristik spielt eine wichtige Rolle für die Gesamt-Pedalcharakteristik des Bremspedals, welche beispielsweise aus einem ersten Betriebsmodus besteht, bei dem der Leerweg noch vorhanden ist sowie einem zweiten Betriebsmodus, der auf den ersten Betriebsmodus folgen kann, mit einem überwundenen Leerweg.

In einer weiteren Ausgestaltung des erfindungsgemäßen Verfahrens ist vorgesehen, dass der Bremskraftverstärker sich in einem Betriebsmodus befindet in dem der Leerweg zwischen dem Eingangselement und dem Ausgangeselement überwunden ist. Außerdem ist vorgesehen, dass der Bremskraftverstärker eine Unterstützungskraft aufbringen kann, die auf ein Ausgangselement wirkt. In diesem Betriebsmodus wird der Bremskraftverstärker derart betrieben, dass die Pedalkraft durch Einstellen der Unterstützungskraft eingestellt wird.

In weiterer Ausgestaltung des erfindungsgemäßen Verfahrens ist vorgesehen, dass die Unterstützungskraft des Bremskraftverstärkers derart eingestellt wird, dass die Pedalkraft einen vorgegebenen Wert annimmt. Somit lässt sich mittels des Bremskraftverstärkers ein vorgegebener Wert für die Pedalkraft einstellen, der Beispielsweise in einem Steuergerät hinterlegt werden kann.

Des Weiteren ist vorgesehen, dass der vorgegebene Wert für die Pedalkraft von einem Verschiebeweg des Eingangselements abhängt. Ein solcher Verschiebeweg des Eingangselements kann über eine vom Fahrer vorgegebene Betätigungsposition des Bremspedals eingestellt werden. Auf diese Weise hängt der vorgegebene Wert für die Pedalkraft fest an einer Betätigungsposition und führt so zu einer Pedalcharakteristik. Pedalkraft und Verschiebeweg können insbesondere in Form einer Kennlinie zusammenhängen beziehungsweise vorgegeben werden und/oder hinterlegt sein. Auf diese Weise kann über ein Vorgeben einer Kennlinie die Pedalcharakteristik vorgegeben werden. Eine variable oder vorgebbare Pedalcharakteristik hat zum Vorteil, dass beispielsweise ein fahrerseitiges oder auch automatisches Auswählen einer an die aktuelle Fahrsituation angepassten Kennlinie möglich ist, so zum Beispiel bei einer Bergabfahrt, einer kurvenreichen Strecke oder bei sportlicher Fahrweise.

Des Weiteren ist vorgesehen, den regelbaren Bremskraftverstärker in einem hydraulischen Teilbremssystem zu betreiben. Das hydraulische Teilbremssystem ist dabei Teil einer Gesamtbremsanlage, die neben dem hydraulischen Teilbremssystem ein zusätzliches Teilbremssystem aufweist. Dabei ist vorgesehen, dass durch Einstellen der Unterstützungskraft des Bremskraftverstärkers einer Änderung der Pedalkraft entgegengewirkt wird. Die Änderung der Pedalkraft wird dabei durch das Anpassen einer Bremswirkung des hydraulischen Teilbremssystems an eine Änderung einer Bremswirkung des zusätzlichen Teilbremssystems hervorgerufen. Dies hat zum Vorteil, dass die Pedalkraft nicht merklich, im Optimalfall gar nicht verändert wird, wenn sich die Bremswirkung des zusätzlichen verändert und deshalb die Bremswirkung des hydraulischen Teilbremssystems angepasst wird, was im Normalfall eine veränderte Pedalkraft zur Folge hat. Der Gegenstand dieses Anspruchs ermöglicht insbesondere ein Betreiben einer Bremsanlage bestehend aus einem hydraulischen und einem regenerativen Bremssystem, welche gemeinsam betrieben werden. Da regenerative Bremssysteme, vor allem die Bremswirkung regenerativer Bremssysteme stark von der Geschwindigkeit des Fahrzeugs abhängen können, ändert sich bei einer Bremsung die Bremswirkung des regenerativen Bremssystems. Diese Änderung der Bremswirkung kann durch das Anpassen der hydraulischen Bremswirkung entgegengewirkt werden, insbesondere kompensiert werden. Durch das erfindungsgemäße Verfahren kann diese Kompensation durchgeführt werden, ohne dass der Fahrer dies bemerkt.

Insbesondere ist vorgesehen, dass das Anpassen der Bremswirkung derart geschieht, dass eine Gesamtbremswirkung des hydraulischen Teilbremssystems (13) und des zusätzlichen Teilbremssystems konstant gehalten wird. Auf diese Weise bemerkt der Fahrer eine Verschiebung der relativen Anteile der einzelnen Teilbremssysteme an der Gesamtbremswirkung des Gesamtbremsanlage nicht.

Insbesondere ist vorgesehen, dass das Anpassen der Bremswirkung des hydraulischen Teilbremssystems **(13)** durch eine fahrerkraftunabhängige Einstellung der Bremswirkung erfolgt, insbesondere mittels einer Anpassungsvorrichtung **(19)** erfolgt. Auf diese Weise muss der Fahrer somit die Anpassung der hydraulischen Bremsweise nicht selbst mittels Anpassung der Fahrerkraft gewährleisten, sondern die Anpassung erfolgt mittels einer Anpassungsvorrichtung, die im hydraulischen Teilbremssystem integriert oder an dieses angeschlossen sein kann.

In vorteilhafter Weise wird der vorgegebene Wert für die Pedalkraft im erfindungsgemäßen Verfahren unter Nutzung wenigstens einer Information bezüglich der folgenden Größen eingestellt: der Wirkung des ersten elastischen Elements, der Wirkung des zweiten elastischen Elements, einer Kraft $F\_hyd$ sowie der Unterstützungskraft. Dabei hängt die Pedalkraft gemäß dem angegebenen Zusammenhang von diesen Größen ab. Auf diese Weise werden alle Wirkungen, also alle Kräfte die zur Pedalkraft beitragen berücksichtigt, wobei zu erkennen ist, dass durch Einstellen der Unterstützungskraft die daraus resultierende Pedalkraft eingestellt werden kann. Insbesondere wenn man von einer Betriebssituation ausgeht, bei der durch Vorgabe des Fahrers über das Eingangselement die Kräfte des ersten und zweiten elastischen Elements vorgegeben sind und durch die Anpassungsvorrichtung die hydraulische Kraft $F\_hyd$ vorgegeben ist.

In vorteilhafter Weiterbildung des erfindungsgemäßen Verfahrens kann bei alleiniger Bremswirkung des zusätzlichen Bremssystems durch Einstellen der Unterstützungskraft jede Pedalkraft kleiner gleich eines Grenzwerts der Pedallkraft eingestellt werden, wobei der Grenzwert sich gemäß des angegebenen Zusammenhangs aus der Wirkung des ersten elastischen Elements und der Wirkung des zweiten elastischen Elements ergibt. Auf diese Weise ist der Grenzwert über die Dimensionierung der elastischen Elemente, insbesondere der Federn einstellbar.

KEIN TEXT MEHR

Des Weiteren kann die Vorrichtung zur Ansteuerung den regelbaren Bremskraftverstärker derart ansteuern, dass die Einstellung der Pedalkraft unter Nutzung der Wirkung des ersten und/oder des zweiten elastischen Elements geschieht, wobei die Pedalkraft von einer Wirkung des ersten und/oder des zweiten elastischen Elements abhängt. Somit kann unabhängig von der Betätigungsposition des Eingangselements immer die richtige, also die aktuell vorliegende Wirkung des ersten und/oder zweiten elastischen Elements zur Ansteuerung des Bremskraftverstärkers berücksichtigt werden.

Weitere Ausgestaltungen der erfindungsgemäßen Vorrichtung zur Ansteuerung des Bremskraftverstärkers sind den Unteransprüchen zu entnehmen.

Ein weiterer Gegenstand der vorliegenden Erfindung ist ein regelbarer Bremskraftverstärker mit einer Vorrichtung nach einem der Ansprüche bezüglich der Vorrichtung zur Ansteuerung des Bremskraftverstärkers, wobei der Bremskraftverstärker Teil einer Bremsanlage eines Kraftfahrzeugs ist. Der Bremskraftverstärker weist dabei ein Eingangselement zur Betätigung der Bremsanlage auf und ist in der Lage eine Unterstützungskraft aufzubringen, die auf ein Ausgangselement des Bremskraftverstärkers wirkt.

Figuren

Figur 1 zeigt schematisch ein hydraulisches Bremssystem in welchem das erfindungsgemäße Verfahren zum Betreiben eines Bremskraftverstärkers zur anwendung kommt. In der hier gezeugten Betätigungsposition besteht noch ein Leerweg zwischen Eingangselement und der Reaktionsscheibe.

Figur **2** zeigt schematisch das in Figur **1** gezeigte Bremssystem, wobei in diesem Fall der Leerweg zwischen Eingangselement und Reaktionsscheibe bereits überwunden ist.

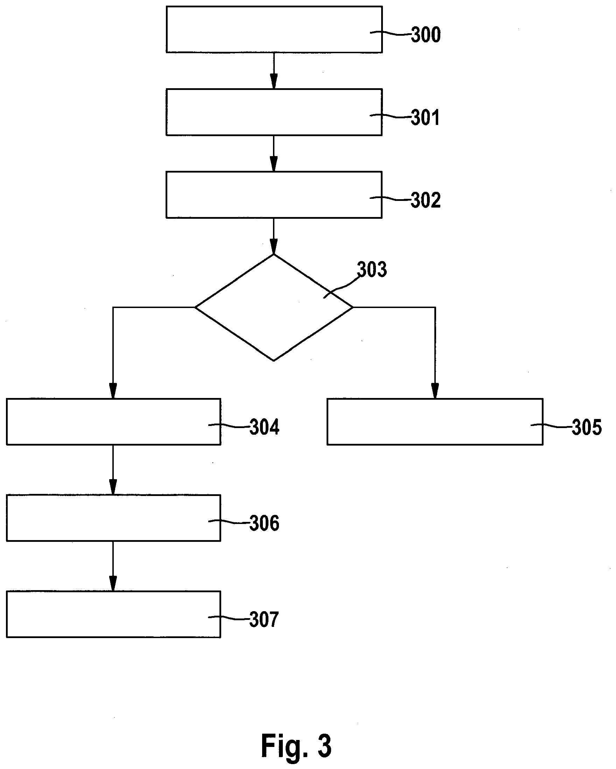

In Figur **3** ist das erfindungsgemäße Verfahren zum Betreiben eines Bremskraftverstärkers in einem Ablaufsdiagramm dargestellt.

Ausführungsformen

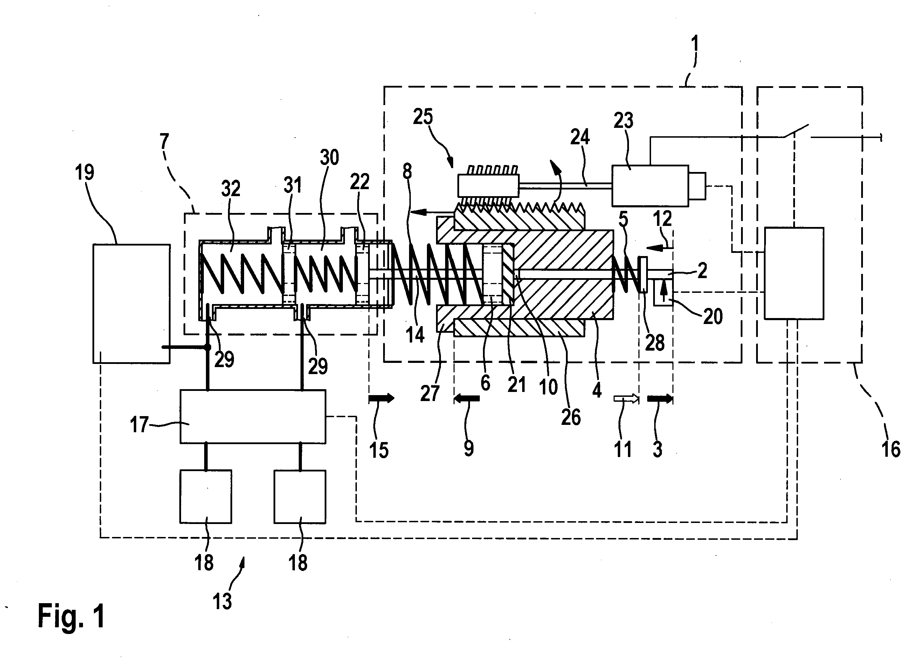

Das erfindungsgemäße Verfahren wird anhand einer Bremsanlage erläutert. Diese Bremsanlage besteht aus wenigstens zwei Teilbremssystemen, die unabhängig voneinander eine Bremswirkung zur Bremsung eines Fahrzeugs aufbringen können. Eines dieser Teilbremssysteme kann ein hydraulisches Teilbremssystem **13** sein. Das hydraulische Teilbremssystem **13** kann wie in Figur **1** dargestellt unter anderem folgende Komponenten aufweisen: einen Bremskraftverstärker **1**, ein Steuergerät für das hydraulische Bremssystem **16**, einen Hauptbremszylinder **7**, dargestellt als ein Tandemhauptbremszylinder **7**, ein Bremsregelsystem, beispielsweise ein ESP oder ABS Hydroaggregat **17**, sowie wenigstens eine Radbremse inklusive Zuleitung **18**. Des Weiteren kann das hydraulische Teilbremssystem eine Anpassungseinheit **19** aufweisen, welche in der Lage ist fahrerunabhängig dem Bremssystem Volumen an Bremsflüssigkeit zu entnehmen und/oder diesem hinzuzufügen. Auf diese Weise kann der Bremsdruck im hydraulischen Bremssystem durch die Anpassungseinheit **19** angepasst werden.

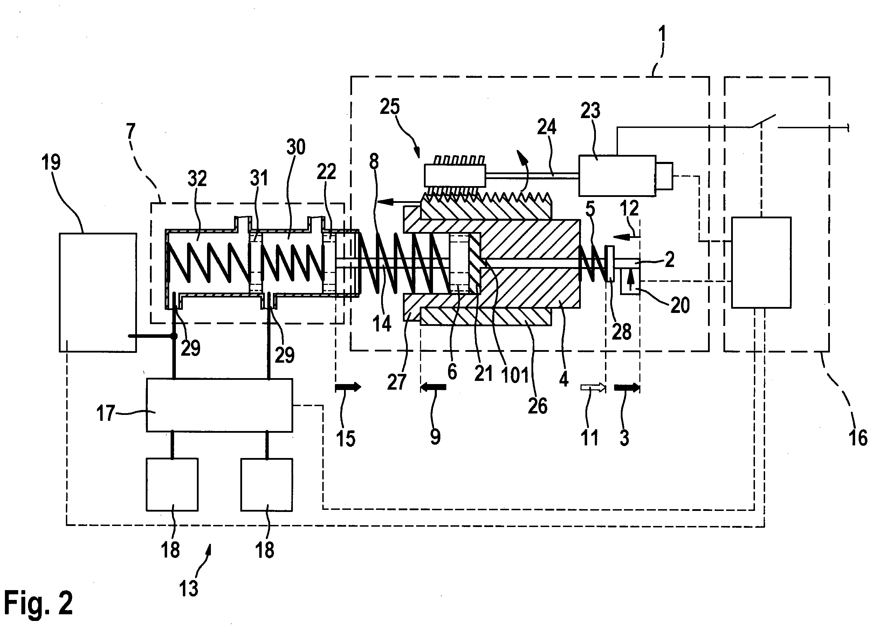

Im folgenden wird auf die oben erwähnten Teile des hydraulischen Teilbremssystems eingegangen. Der Bremskraftverstärker **1** ist in Figur **1** als elektromechanischer Bremskraftverstärker dargestellt. Die Erfindung ist allerdings nicht auf diese Art der Verstärkung beschränkt. Die Nutzung eines Vakuumbremskraftverstärkers, oder eines hydraulischen Bremskraftverstärkers ist ebenso möglich. Der elektromechanische Bremskraftverstärker **1** umfasst ein Eingangselement **2** zur Aufnahme eines Fahrerbremswunsches. Das Eingangselement **2** kann beispielsweise an ein Bremspedal (nicht eingezeichnet) oder an einen Bremshebel gekoppelt sein über das der Fahrzeugführer eine Bremskraft aufbringt. Eine Sensoreinrichtung **20** ist vorgesehen, um einen Verschiebeweg **12** des Eingangselements zu bestimmen. Verschiebt der Fahrer das Eingangselement in Betätigungsrichtung (in Figur **1** nach links) so kann er über eine Reaktionsscheibe **21** ein Ausgangselement **14, 6** mit Kraft beaufschlagen und somit eine Kraft auf einen Eingangskolben **22** des Tandemhauptbremszylinders aufbringen. Das Ausgangselement **6,14** kann dazu beispielsweise eine Kolbenstange **14** aufweisen, welche an den Eingangskolben **22** des Tandemhauptbremszylinders **7** gekoppelt ist. Die Reaktionsscheibe **21** befindet sich in Anlage, oder auch in fester Verbindung mit einem Führungsteil **6** des Ausgangselements **6, 14**. Zwischen der Reaktionsscheibe **21** und dem Eingangselement **2** kann ein Leerweg **10** vorgesehen sein, der bei einer Kraftübertragung vom Fahrer über das Eingangselement **2** auf das Ausgangselement **6, 14** überwunden sein muss. Ein Betätigungszustand bei dem der Leerweg **10** überwunden ist, ist in Figur **2,101** zu sehen. Hier wurden identische Elemente nicht neu bezeichnet.

Zusätzlich zur Fahrerkraft kann das Ausgangselement **6, 14** mit einer Unterstützungskraft F_sup **9** des elektromechanischen Bremskraftverstärkers **1** beaufschlagt werden. Dazu wird eine Rotationsbewegung eines Elektromotors über eine Stange **24** und ein Rotations-Translations-Umsetzungsgetriebe **25** in eine translatorische Bewegung eines Verstärkergehäuses **26** umgesetzt. Die Ausführung dieses elektromechanischen Bremskraftverstärkers ist hier lediglich als Beispiel zu sehen, ebenso sind weitere Antriebsarten möglich, wie zum Beispiel Riemengetriebe, Schneckengetriebe, Spindelantriebe, wobei die Aufzählung nicht abschließend ist. Wird der Elektromotor **23** angetrieben, so bewegt sich das Verstärkergehäuse **26** in Betätigungsrichtung des Tandemhauptbremszylinders **7**, diese Richtung fällt mit der Betätigungsrichtung des Eingangselements **2** zusammen. Das Verstärkergehäuse **26** umfasst einen Verstärkerkörper **4** der über einen Anschlag **27** die Translationsbewegung des Verstärkergehäuses **26** auf den Verstärkerkörper **4** überträgt. Der Verstärkerkörper **4** weist in axialer Richtung zwei zentrische Öffnungen auf, die zum einen das Eingangselement **2**, zum andern das Führungsteil **6** des Ausgangselements **6, 14** umfassen. Dabei können Eingangselement **2** und Führungsteil **6** beispielsweise gleitend gelagert sein. Die Reaktionsscheibe befindet sich in einem äußeren Bereich somit in axialer Richtung zwischen Führungsteil **6** und Verstärkerkörper **4**. Kommt die Reaktionsscheibe **21** in diesem äußeren Bereich zur Anlage an den Verstärkerkörper **4** oder ist sie in dauerhafter Anlage, so kann die Unterstützungskraft F_support, welche von dem elektromechanischen Bremskraftverstärker **1** aufgebracht wird über die Reaktionsscheibe **21**, insbesondere über deren äußeren Bereich auf das Ausgangselement **6, 14** übertragen werden. Über einen inneren Bereich der Reaktionsscheibe kann die Fahrerkraft auf das Ausgangselement **6, 14** übertragen werden. Dazu muss der Leerweg **10**, wie erwähnt, überwunden sein.

Das Eingangselement **2** weist eine Ausformung **28** auf, an der sich ein elastisches Element **5** abstützt. Die Ausformung kann beispielsweise in Form einer ringförmigen Ausformung vorgesehen sein. Ebenso denkbar ist es, dass ein Abstützpunkt / eine Abstützfläche als zusätzliches Bauteil an das Eingangselement angebracht wird. Das elastische Element kann beispielsweise in Form einer Feder vorgesehen sein. Eine Vorspannung der Feder ist gegebenenfalls möglich. Die der Ausformung **28** abgewandte andere Seite des elastischen Elements **5**, insbesondere die Feder **5**, stützt an dem Verstärkerkörper **4** ab. Wird die Feder **5** durch Verschieben des Eingangselements **2** in Richtung des Verstärkerkörpers komprimiert, so führt das zu einer Rückstellkraft **11**, die der Verschiebung entgegen gerichtet ist. Zwischen dem Führungsteil **6** und dem Tandemhauptzylinder **7** ist ein zweites elastisches Element **8** angebracht, welches auf der einen Seite am Tandemhauptzylinder abstützt und auf der anderen Seite am Führungsteil **6**. Bei einer Verschiebung des Ausgangselements **6, 14** in Richtung des Tandemhauptzylinders wird das zweite elastische Element komprimiert, was ebenso zu einer Rückstellkraft führt, die der Verschiebung entgegengerichtet ist. Das zweite elastische Element kann ebenfalls eine Feder, gegebenenfalls mit einer Vorspannung sein.

Eine lineare Federkennlinie ist bei beiden Federn nicht zwingend notwendig. Sowohl die erste **5** als auch die zweite Feder **8** können eine nichtlineare Federkennlinie aufweisen.

Zur Steuerung / Regelung des Bremskraftverstärkers ist ein Steuergerät **16** vorgesehen, welches beispielsweise anhand von Signalen der Sensoreinrichtung **20** sowie anhand von Signalen des Motors **23** den elektromechanischen Bremskraftverstärker steuert. Die Verwendung weiterer Sensoren ist dabei selbstverständlich möglich, beispielsweise eine Differenzwegsensors zur Bestimmung der Relativauslenkung zwischen Eingangselement 2 und Verstärkerkörper **4,** oder eines Kraftsensors zur Bestimmung der Fahrerkraft. Durch das Ansteuern des Bremskraftverstärkers ist es möglich die Unterstützungskraft einzustellen. Somit ist der Bremskraftverstärker als Verstärker mit variabler Verstärkung, also variablem Verhältnis von Fahrerkraft zu Unterstützungskraft zu verstehen. Ebenso kann die Verstärkung beispielsweise aktiv an die Fahrsituation angepasst werden, oder in Abhängigkeit weiterer Größen in Form einer Kennlinie im Steuergerät des Bremskraftverstärkers hinterlegt sein. Insbesondere können solche weitere Größen der Verschiebeweg **12** oder die Bremswirkung eines weiteren Bremssystems, beispielsweise eines regenerativen Teilbremssystems, des Fahrzeugs sein.

Das Steuergerät **16** des Bremskraftverstärkers muss nicht separat im Fahrzeug vorgesehen sein, ebenso gut kann Teil eines Steuergeräts für die gesamte Bremsanlage oder für das gesamte Fahrzeug sein.

Der Hauptbremszylinder **7** dient der Aufnahme der Betätigungskraft, die vom Bremskraftverstärker **1** und/oder vom Fahrer aufgebracht wird. Die Darstellung als Tandemhauptbremszylinder (mit zwei Kolben und zwei Kammern) ist eine von mehreren Möglichkeiten den Hauptbremszylinder auszuführen. Der Hauptbremszylinder weist im gezeigten Fall zwei Verbindungen zu einem Reservoir für Hydraulikflüssigkeit auf (nicht eingezeichnet) sowie zwei Auslässe für Hydraulikflüssigkeit **29,** welche zu angeschlossenen Bremskreisen führen. Durch die Betätigungskraft, die von Bremskraftverstärker und Fahrer aufgebracht wird, wird der erste Kolben **22** des Hauptbremszylinders in Betätigungsrichtung verschoben (nach links in Figur 1), was dazu führt, das Hydraulikflüssigkeit aus der ersten Kammer durch den ersten Auslass in Richtung des angeschlossenen Bremskreises verschoben wird. Mit einer solchen Betätigung geht ein Verschieben des zweiten Kolbens **31** einher, wodurch ebenfalls Hyraulkflüssigkeit aus der zweiten Kammer **32** in Richtung des zweiten Bremskreises verschoben wird. Das Einbringen von Hydraulikflüssigkeit in den Bremskreis führt zu einer Druckerhöhung an den Radbremsen **18,** die an die Bremskreise angeschlossen sind und somit zu einer Bremswirkung. Die Radbremsen **18** sind hier schematisch als p-V- Elemente aufgeführt, bei denen eine Volumenaufnahme V zu einem resultierenden Druck p führt. Diese Elemente beinhalten nicht nur die Radbremse an sich sondern ebenso die Zuleitungen zu den Radbremsen. Jedes der hier gezeigten Element **18** kann durchaus mehrere Radbremsen umfassen, so zum Beispiel alle Radbremsen einer Achse des Fahrzeugs.

Zwischen den Radbremsen **18** und dem Tandemhauptzylinder **7** kann ein Bremsdruckregelsystem und/oder ein Bremsschlupfregelsystem vorgesehen sein, beispielsweise ein ESP- / ABS-Hydraulikaggregat **17,** auf das hier nicht weiter eingegangen wird.

Des Weiteren kann das hydraulische Teilbremssystem eine Anpassungseinheit **19** aufweisen, welche in der Lage ist fahrerunabhängig dem Bremssystem Volumen an Bremsflüssigkeit zu entnehmen und/oder diesem hinzuzufügen. Auf diese Weise kann der Bremsdruck im hydraulischen Bremssystem durch die Anpassungseinheit **19** angepasst werden. Eine solche Anpassungseinheit kann beispielsweise eine Kolben-Zylinder-Anordnung mit einem Steller sein, oder ein Hydraulikspeicher, in den / oder aus dem Volumen an Hydraulikflüssigkeit aufgenommen / abgegeben wird.

Ein Druck der nach Betätigung des Hauptbremszylinders in den Kammern des Hauptbremszylinders vorherrscht führt zu einer Reaktionskraft des Bremssystems F_hyd, welche der ursprünglichen Betätigungsrichtung entgegengerichtet ist. Die Reaktionskraft F_hyd wirkt zumindest anteilig auf das Eingangselement 2 zurück.

Betrachtet man die oben beschriebenen Kräfte, welche auf das Eingangselement **2** und somit auf den Fahrer wirken, so lassen sich folgende Kräfte identifizieren: eine Eingangskraft des Fahrers, eine Unterstützungskraft F_sup**9** des Bremskraftverstärkers, die Rückstellkraft der ersten Feder *F_spring1* **11,** die Rückstellkraft der zweiten Feder *F_spring2* **15** sowie die Reaktionskraft des hydraulischen Bremssystems F_hyd **15.**

Diese Kräfte lassen sich zu einer Kraft F_ped **3,** welche als gesamte Rückwirkung auf das Eingangselement wirkt, zusammenfassen.

$$F\_ped = F\_spring\mathbf{1} + F\_spring\mathbf{2} + F\_hyd - F\_support$$

Bei fester Betätigungsposition des Eingangselements **2,** d.h. bei festem Verschiebeweg **12** liegt somit bei eingeregelter beziehungsweise eingestellter Unterstützungskraft F_sup eine definierte Rückwirkungskraft F_ped vor. Diese Kraft erwartet der Fahrer wenn er das Eingangselement an diese Betätigungsposition führt. Der Zusammenhang zwischen F_ped und dem Verschiebeweg **12** entspricht dem Pedalgefühl des Fahrers, seiner gewohnten Bremspedalcharakteristik. Außerdem erwartet der Fahrer eine der Betätigungsposition entsprechende Bremswirkung.

Wird eine Bremsung rein hydraulisch durchgeführt, so wird der Bremskraftverstärker gemäß seiner üblichen Kennlinie betrieben, welche den Zusammenhang aus Verschiebeweg **12** und Unterstützungskraft F_sup vorgibt. Umfasst die Gesamtbremsanlage neben dem hydraulischen Teilbremssystem ein weiteres, beispielsweise regeneratives Bremssystem, so ergibt sich bei einer kombinierten Bremsung mit beiden Teilbremssystem eine Bremswirkung ein Gesamtbremsmoment. Ändert sich die Bremswirkung des regenerativen Bremssystems, so muss die Bremswirkung des hydraulischen Teilbremssystems an die Bremswirkung des regenerativen Bremssystems angepasst werden, damit das Gesamtbremsmoment konstant bleibt.

Um dies zu gewährleisten wird im erfindungsgemäßen Verfahren die Bremswirkung des hydraulischen Bremssystems durch Betreiben der Anpassungseinheit an das regenerative Bremsmoment angepasst indem durch die Anpassungseinheit **19** Volumen an Hydraulikflüssigkeit dem Bremssystem entnommen wird und/oder diesem zugeführt wird. Das Anpassen der Bremswirkung erfolgt hier unabhängig vom Fahrer, insbesondere unabhängig von einer Fahrerkraft. Die Anpassungseinheit **19** wird durch ein Steuergerät betrieben.

Durch das Anpassen ändert sich jedoch der Druck im Bremssystem. Eine solche Druckänderung führt zu einer veränderten Reaktionskraft F_hyd und wie oben gezeigt somit zu einer veränderten Rückwirkung F_ped.

Der Fahrer, der eine dem Verschiebeweg und der Fahrerkraft entsprechende Rückwirkung F_ped erwartet, kann diese Änderung bemerken und als irritierend empfinden. Aus diesem Grund wird im erfindungsgemäßen Verfahren die Kraft F_ped durch Einstellen der Unterstützungskraft F_sup eingestellt.

In einem ersten Schritt **300** wird dazu festgestellt, ob eine Änderung der Bremswirkung des regenerativen Teilbremssystems vorliegt. Durch die Anpassungsvorrichtung wird der Druck im hydraulischen Bremssystem an die Bremswirkung des regenerativen Teilbremssystems angepasst. Ist dies der Fall, so wird anhand der Sensoreinrichtung **20** in einem Schritt **301** der Verschiebeweg des Eingangselements ermittelt. In einem Schritt **302** wird dann anhand einer hinterlegten Kennlinie die einzustellende Kraft F_ped,soll ermittelt. In einer Verzweigung wird im Schritt **303** festgestellt, ob der Leerweg **10** überwunden ist, oder nicht. Ist dies nicht der Fall so wird der Bremskraftverstärker in Schritt **305** wie gewohnt anhand seiner ursprünglichen Kennlinie betrieben, das heißt anhand seines ursprünglichen Zusammenhangs zwischen Verschiebeweg des Eingangselements und aufzubringender Unterstützungskraft. Die Rückwirkung F_ped resultiert in diesem Fall alleine von der ersten Feder **5** über die Rückstellkraft F_spring**1.** Dieses Verhalten kennt der Fahrer, es ist kein Einstellen der Kraft F_ped, somit auch keine Änderung der Unterstützungskraft F_sup notwendig.

Wird allerdings in Schritt **303** festgestellt, dass der Leerweg überwunden ist, so verläuft das Verfahren in Schritt **304** weiter. In Schritt **304** werden die zur Bestimmung der momentan vorliegenden Kräfte notwendigen Größen bestimmt. Zu diesem Zweck können Informationen, die die aktuell vorliegenden Kräfte direkt oder indirekt repräsentieren, einem Steuergerät zugeführt werden, welches diese Informationen weiterverarbeitet und zur Ansteuerung des Bremskraftverstärkers nutzt. Die Informationen werden dabei von Sensoren bereitgestellt, welche in der Bremsanlage beziehungsweise in einzelnen Komponenten der Bremsanlage vorhanden sind oder auch aus bekannten Betriebsgrößen einzelner Komponenten abgeleitet.

So lassen sich die Rückstellkraft der ersten Feder F_spring1 **11** und die Rückstellkraft der zweiten Feder F_spring2 **15** aus der jeweiligen Vorspannung der Feder, der jeweiligen Federkonstanten sowie des vorliegenden Federwegs, also der Kompression der Feder bestimmen. Bei einer linearen Federkennlinie ergibt sich beispielsweise für die Rückstellkraft F_spring1 11 der ersten Feder

$$F\_spring1 = F0 + k * s,$$

wobei hier F0 für die Vorspannung und s für den Verschiebeweg des Eingangselements steht. Vorspannung und Federkonstante können softwareseitig im Steuergerät hinterlegt sein, der Verschiebeweg des Eingangselements kann mittels der Sensoreinrichtung **20** ermittelt werden.

Um die Rückstellkraft der zweiten Feder F_spring2 **15** zu bestimmen, kann der Federweg bspw. über einen Rotorlagensensor (nicht eingezeichnet) des Motors **23** mit Hilfe der Getriebeübersetzung berechnet werden.

Bei nichtlinearen Federkennlinien kann für beide Federn die Rückstellkraft aus der jeweiligen Federkennlinie bei bekanntem Federweg, ermittelt werden. Die nichtlineare Federkennlinie kann softwareseitig im Steuergerät hinterlegt werden, der Federweg ergibt sich wie oben beschrieben aus Betriebsdaten des Motors beziehungsweise aus Signalen der Sensoreinrichtung **20.**

Die Unterstützungskraft F_sup lässt sich unter Zuhilfenahme der Motorsteuerungs-Software des Elektromotors **23** ermitteln. Über die Motorsteuerung lässt sich aus der Bestromung des Motors das aktuell anliegende Moment berechnen. Die resultierende Unterstützungskraft ergibt sich aus dem Wirkungsgrad und der Getriebeübersetzung.

Die Reaktionskraft F_hyd ergibt lässt sich auf zwei Wegen bestimmen. Eine Möglichkeit besteht darin, den Druck im Hydraulikaggregat zu messen, beispielsweise den Vordruck mittels eines Sensors im ESP-Hydraulikaggregat. Mit Hilfe dieses gemessenen Drucks ergibt sich unter Berücksichtigung der Querschnittsfläche des Hauptzylinders die Reaktionskraft F_hyd. Eine weitere Möglichkeit besteht darin, aus de Volumenaufnahme der Anpassungseinheit **19** bei bekannter Druck-Volumen-Kennlinie des hydraulischen Bremssystems den Druck im hydraulischen Bremssystem zu bestimmen, und daraus dann, wie in der ersten Möglichkeit beschrieben die Reaktionskraft F_hyd zu bestimmen.

Für alle hier aufgeführten Methoden beziehungsweise Wege ist zu sagen, dass dies keinesfalls die einzigen Möglichkeiten darstellen, die beteiligten Kräfte zu bestimmen. So ist es ohne weiteres denkbar, die Kräfte auch direkt über Kraftsensoren zu bestimmen, oder beispielweise weitere Weg und/oder Drucksensoren vorzusehen, mittels derer dann die Kräfte bestimmt werden können.

Sind die Werte für F_spring1, F_spring2, F_sup und F_hyd bekannt, so wird daraus die momentan vorliegende Rückwirkung F_ped ermittelt.

Aus der Differenz des Sollwerts F_ped,soll und der vorliegenden Rückwirkung F_ped wird in Schritt **306** die einzustellende Unterstützungskraft bestimmt. Diese Unterstützungskraft wird dann in Schritt **307** eingestellt.

Auf diese Weise ist gewährleistet, dass der Fahrer die von ihm an dieser Betätigungsposition erwartete Rückwirkung am Eingangselement erfährt, unabhängig davon ob rein hydraulisch, rein regenerativ oder mit einer Mischung der Teilbremssysteme gebremst wird.

Wird beispielsweise rein regenerativ gebremst, so wird durch die Anpassungsvorrichtung dafür gesorgt, dass die Reaktionskraft F_hyd gleich null ist. Für die Rückwirkung F_ped ergibt sich dann:

$$F\_ped = F\_spring1 + F\_spring2 - F\_sup.$$

Hier sieht man, dass durch Einstellen der Unterstützungskraft jede Rückwirkung zwischen 0 und einem Maximalwert F_ped,max = F_spring1 + F_spring2 eingestellt werden kann.

In dieser Situation hat der Bremskraftverstärker dann die Funktion eines reinen Pedalsimulators. Die Rückwirkung F_ped basiert nur noch auf der Rückstellkraft der ersten Feder *F-spring1* **11** und der Rückstellkraft der zweiten Feder *F_spring2* sowie auf der Unterstützungskraft.

Die Funktionsweise des Bremskraftverstärkers in Situationen in denen F_hyd = 0 ist, oder F_hyd konstant ist lässt sich beispielsweise auch bei anders gearteten Fremdkraftbremsungen einsetzen, beispielsweise bei vom Hauptbremszylinder abgekoppelten Bremskreisen wobei dann im Hydraulikaggregat Druck aufgebaut wird. Auch in diesen Situationen kann dann durch Einstellung der Unterstützungskraft die Pedalrückwirkung wie beschrieben zwischen 0 und einem Maximalwert F_ped,max = F_spring1 + F_spring2 eingestellt werden. Gegebenenfalls ist eine konstante Kraft F_hyd dabei zu berücksichtigen.

**Patentansprüche**

**1.** Verfahren zum Betreiben eines regelbaren Bremskraftverstärkers (1) einer Bremsanlage

eines Kraftfahrzeugs,
wobei der Bremskraftverstärker ein Eingangselement (2) zur Betätigung der Bremsanlage aufweist,
wobei eine Pedalkraft (F _ped, 3), die auf das Eingangselement (2) wirkt, durch Betreiben des regelbaren Bremskraftverstärkers (1) eingestellt wird;
**dadurch gekennzeichnet,**
**dass** zwischen dem Eingangselement (2) und einem Verstärkerkörper (4) des regelbaren Bremskraftverstärkers (1) ein erstes elastisches Element (5) angeordnet ist, wobei das erste elastische Element (5) sich auf seiner einen Seite an einer Ausformung des Eingangselements (2) und auf seiner anderen Seite an dem Verstärkerkörper (4) abstützt
und eine erste Feder (5) ist, und
**dass** zwischen einem Ausgangselement (6) des regelbaren Bremskraftverstärkers (1) und einem Hauptzylinder (7) ein zweites elastisches Element (8) angeordnet ist, wobei das zweite elastische Element (8) sich auf seiner einen Seite an dem Hauptbremszylinder (7) und auf seiner anderen Seite an einem Führungsteil (6) des Ausgangselements (6) abstützt und eine zweite Feder (8) ist, und
**dass** die Pedalkraft (F_ped,3) von einer Wirkung der ersten und/oder der zweiten Feder (5,8) abhängt, und unter Nutzung wenigstens einer Information bezüglich der ersten und/oder zweiten Wirkung eingestellt wird, wobei das Ausgangselement (6) über eine in Anlage oder in fester Verbindung mit dem Führungsteil des Ausgangselements (6) vorliegende Reaktionsscheibe (21) mittels des Eingangselements (2) sowie mittels des in Anlage mit der Reaktionsscheibe (21) vorliegenden Verstärkerkörpers (4) mit Kraft beaufschlagbar ist.

**2.** Verfahren nach Anspruch 1, wobei

ein von einem Betriebsmodus des Bremskraftverstärkers abhängiger Leerweg (10) zwischen dem Eingangselement (2) und dem Ausgangselement (6) vorgesehen ist,
**dadurch gekennzeichnet,**
**dass** der regelbare Bremskraftverstärker (1) bei vorhandenem Leerweg (10) gemäß seiner ursprünglichen Kennlinie betrieben wird.

3. Verfahren nach Anspruch 2,

   **dadurch gekennzeichnet,**
   **dass** die Pedalkraft (F_ped, 3) von der ersten Wirkung der ersten Feder (5) abhängt, insbesondere über eine Kraft *F_spring1* (11) gemäß dem Zusammenhang F_ped = F_spring1.

4. Verfahren nach Anspruch 1 oder Anspruch 3, wobei

   ein von einem Betriebsmodus des Bremskraftverstärkers (1) abhängiger Leerweg (10) zwischen dem Eingangselement (2) und dem Ausgangselement (6) vorgesehen ist,
   wobei der Bremskraftverstärker (1) eine Unterstützungskraft (F_sup, 9), wirkend auf das Ausgangselement (6) aufbringen kann,
   **dadurch gekennzeichnet,**
   **dass** bei überwundenem Leerweg (10) der regelbare Bremskraftverstärker (1) derart betrieben wird, dass durch Einstellen der Unterstützungskraft (F_sup, 9) die Pedalkraft (F_ped, 3) eingestellt wird.

5. Verfahren nach Anspruch 4,

   **dadurch gekennzeichnet,**
   **dass** die Unterstützungskraft (F_sup, 9) durch Betreiben des Bremskraftverstärkers (1) derart eingestellt wird, dass die auf das Eingangselement (2) wirkende Pedalkraft (F_ped, 3) einen vorgegebenen Wert annimmt.

6. Verfahren nach Anspruch 5,

   **dadurch gekennzeichnet,**
   **dass** der vorgegebene Wert für die Pedalkraft (F_ped, 3) von einem Verschiebeweg (12) des Eingangselements (2) abhängt, insbesondere in Form einer Kennlinie abhängt.

7. Verfahren nach wenigstens einem der vorhergehenden Ansprüche, wobei

   der regelbare Bremskraftverstärker (1) Teil eines hydraulischen Teilbremssystems (13) einer Gesamtbremsanlage ist,
   wobei die Gesamtbremsanlage neben dem hydraulischen Teilbremssystem (13) ein zusätzliches Teilbremssystem aufweist,
   wobei der Bremskraftverstärker (1) eine Unterstützungskraft (F_sup, 9), wirkend auf das Ausgangselement (6) aufbringen.kann,
   **dadurch gekennzeichnet,**
   **dass** einer Änderung der Pedalkraft (F_ped, 3) durch Einstellen der Unterstützungskraft (F_sup, 9) entgegengewirkt wird,
   wobei die Änderung der Pedalkraft (F_ped, 3) durch das Anpassen einer Bremswirkung des hydraulischen Teilbremssystems (13) an eine Änderung einer Bremswirkung des zusätzlichen Teilbremssystems hervorgerufen wird.

8. Verfahren nach Anspruch 7,

   **dadurch gekennzeichnet,**
   **dass** das Anpassen der Bremswirkung derart geschieht, dass eine Gesamtbremswirkung des hydraulischen Teilbremssystems (13) und des zusätzlichen Teilbremssystems konstant gehalten wird.

9. Verfahren nach Anspruch 7 oder 8,

   **dadurch gekennzeichnet,**
   **dass** das Anpassen der Bremswirkung des hydraulischen Teilbremssystems (13) durch eine fahrerkraftunabhängige Einstellung der Bremswirkung erfolgt, insbesondere mittels einer Anpassungsvorrichtung (19) erfolgt.

10. Verfahren nach wenigstens einem der vorhergehenden Ansprüche,

**dadurch gekennzeichnet,**
**dass** der vorgegebene Wert für die Pedalkraft F_ped (3) gemäß des Zusammenhangs:

$$F\_ped = F\_spring1 + F\_spring2 + F\_hyd - F\_sup$$

von der Wirkung der ersten Feder (5) F_spring1,
der Wirkung der zweiten Feder (8) F_spring2,
von einer Kraft F_hyd (15), sowie
von der Unterstützungskraft *F_sup* (9) abhängt
und unter Nutzung wenigstens einer Information bezüglich dieser Größen eingestellt wird.

11. Verfahren nach Anspruch 10,

**dadurch gekennzeichnet,**
**dass** bei alleiniger Bremswirkung des zusätzlichen Bremssystems durch Einstellen der Unterstützungskraft *F_sup* (9) jede Pedalkraft F_ped (3) kleiner gleich eines Grenzwerts der Pedalkraft F_ped,max eingestellt werden kann,
wobei der Grenzwert der Pedalkraft F_ped,max sich gemäß

$$F\_ped,max = F\_spring1 + F\_spring2$$

ergibt.

12. Vorrichtung zur Ansteuerung eines regelbaren Bremskraftverstärkers (1),

der Teil einer Bremsanlage eines Kraftfahrzeugs ist,
die ein Eingangselement (2) zur Betätigung der Bremsanlage aufweist, wobei der Bremskraftverstärker(1) eine Unterstützungskraft (F _sup, 9), wirkend auf ein
Ausgangselement (6) des Bremskraftverstärkers (1) aufbringen kann,
wobei die Ansteuerung derart geschieht, dass mittels des Bremskraftverstärkers (1) eine
Pedalkraft (F ped, 3), die auf das Eingangselement (2) wirkt, eingestellt wird;

**dadurch gekennzeichnet,**

**dass** zwischen dem Eingangselement (2) und einem Verstärkerkörper (4) des regelbaren
Bremskraftverstärkers (1) ein erstes elastisches Element (5) angeordnet ist, wobei das erste
elastische Element (5) sich auf seiner einen Seite an einer Ausformung des Eingangselements (2) und auf seiner anderen Seite an dem Verstärkerkörper (4) abstützt
und eine erste Feder (5) ist, und
zwischen dem Ausgangselement (6) des regelbaren Bremskraftverstärkers (1) und einem
Hauptzylinder (7) ein zweites elastisches Element (8) angeordnet ist, wobei das zweite elastische Element (8)
sich auf seiner einen Seite an dem Hauptbremszylinder (7) und auf seiner anderen Seite an einem Führungsteil
(6) des Ausgangselements (6) abstützt und eine zweite Feder (8) ist, und
die Ansteuerung derart geschieht, dass die Pedalkraft (F_ped,3) von einer Wirkung der ersten und/oder der
zweiten Feder (8) abhängt,
wobei das Ausgangselement (6) über eine in Anlage oder in fester Verbindung mit dem Führungsteil (6) des
Ausgangselements (6) vorliegenden Reaktionsscheibe (21) mittels des Eingangselements (2), sowie mittels
des in Anlage mit der Reaktionsscheibe (21) vorliegenden Verstärkerkörpers (4) mit Kraft beaufschlagbar ist.

13. Vorrichtung nach Anspruch 12,

**dadurch gekennzeichnet, dass**

ein von einem Betriebsmodus des Bremskraftverstärkers (1) abhängiger Leerweg (10) zwischen dem Eingangselement (2) und dem Ausgangselement (6) vorgesehen ist, und
die Ansteuerung derart geschieht, dass bei überwundenem Leerweg (10) der regelbare Bremskraftverstärker (1) eine Unterstützungskraft (F_sup, 9) aufbringt, mittels derer die Pedalkraft (F_ped, 3) eingestellt wird.

**14.** Vorrichtung nach Anspruch 13,

**dadurch gekennzeichnet,**
**dass** der regelbare Bremskraftverstärker (1) Teil eines hydraulischen Teilbremssystems (13) einer Gesamtbremsanlage ist,
die neben dem hydraulischen Teilbremssystem (13) ein zusätzliches Teilbremssystem aufweist,
und die Ansteuerung derart geschieht, dass der Bremskraftverstärker (1) eine Unterstützungskraft (F_sup, 9) aufbringt, die einer Änderung der Pedalkraft (F_ped, 3) entgegengewirkt,
wobei die Änderung der Pedalkraft (F_ped, 3) durch das Anpassen einer Bremswirkung des hydraulischen Teilbremssystems (13) an eine Änderung einer Bremswirkung des zusätzlichen Teilbremssystems hervorgerufen wird.

**15.** Regelbarer Bremskraftverstärker (1),

der Teil einer Bremsanlage eines Kraftfahrzeugs ist,
die ein Eingangselement (2) zur Betätigung der Bremsanlage aufweist,
wobei der Bremskraftverstärker (1) eine Unterstützungskraft (F_sup, 9), wirkend auf ein Ausgangselement (6) des Bremskraftverstärkers (1) aufbringen kann
mit einer Vorrichtung nach einem der Ansprüche 12 bis 14.

**Claims**

1. Method for operating a controllable brake booster (1) of a brake system of a motor vehicle, wherein the brake booster has an input element (2) to activate the brake system, wherein a pedal force (F_ped, 3) which acts on the input element (2) is set by operating the controllable brake booster (1);

   **characterized in that** a first elastic element (5) is arranged between the input element (2) and a booster body (4) of the controllable brake booster (1), wherein the first elastic element (5) is supported on its one side on a shaped-out formation of the input element (2) and on its other side on the booster body (4) and is a first spring (5), and **in that** a second elastic element (8) is arranged between an output element (6) of the controllable brake booster (1) and a master cylinder (7), wherein the second elastic element (8) is supported on its one side on the brake master cylinder (7) and on its other side on a guide part (6) of the output element (6) and is a second spring (8), and **in that** the pedal force (F_ped, 3) depends on an effect of the first and/or second spring (5, 8) and is set using at least one piece of information in relation to the first and/or second effect,
   wherein force can be applied to the output element (6) via a reaction plate (21), which is in contact with or in fixed connection to the guide part of the output element (6), by means of the input element (2) and by means of the booster body (4), which is present in contact with the reaction plate (21).

2. Method according to Claim 1, wherein an idle travel (10) dependent on an operating mode of the brake booster is provided between the input element (2) and the output element (6), **characterized in that** when an idle travel (10) is present, the controllable brake booster (1) is operated according to its original curve.

3. Method according to Claim 2, **characterized in that** the pedal force (F_ped, 3) depends on the first effect of the first spring (5), in particular via a force F_spring1 (11) according to the correlation:

$$F\_ped = F\_spring1.$$

4. Method according to Claim 1 or Claim 3, wherein an idle travel (10) dependent on an operating mode of the brake booster (1) is provided between the input element (2) and the output element (6), wherein the brake booster (1) can apply a supporting force (F_sup, 9) acting on the output element (6), **characterized in that** when the idle travel (10) is overcome, the controllable brake booster (1) is operated such that the pedal force (F_ped, 3) is set by adjusting the supporting force (F_sup, 9).

5. Method according to Claim 4, **characterized in that** the supporting force (F_sup, 9) is set by operating the brake booster (1) such that the pedal force (F_ped, 3) acting on the input element (2) assumes a pre-specified value.

6. Method according to Claim 5, **characterized in that** the pre-specified value for the pedal force (F_ped, 3) depends on a displacement travel (12) of the input element (2), in particular in the form of a curve.

7. Method according to at least one of the preceding claims, wherein the controllable brake booster (1) is part of a hydraulic partial brake system (13) of a total brake system, wherein the total brake system as well as the hydraulic partial brake system (13) has an additional partial brake system, wherein the brake booster (1) can apply a supporting force (F_sup, 9) acting on the output element (6), **characterized in that** a change in the pedal force (F_ped, 3) is countered by adjusting the supporting force (F_sup, 9), wherein the change in the pedal force (F_ped, 3) is provoked by adapting a braking effect of the hydraulic partial brake system (13) to a change in a braking effect of the additional partial brake system.

8. Method according to Claim 7, **characterized in that** the braking effect is adapted such that a total braking effect of the hydraulic partial brake system (13) and the additional partial brake system is held constant.

9. Method according to Claim 7 or 8, **characterized in that** the braking effect of the hydraulic partial brake system (13) is adapted by setting the braking effect independently of the driver's force, in particular by means of an adaptation device (19).

10. Method according to at least one of the preceding claims, **characterized in that** the pre-specified value for the pedal force F_ped (3) depends on the effect of the first spring (5) F_spring1, the effect of the second spring (8) F_spring2, on a force F_hyd (15) and on the supporting force *F_sup* (9) according to the correlation: F_ped = F_spring1 + *F_spring2 + F_hyd - F_sup,* and is set using at least one piece of information relating to these values.

11. Method according to Claim 10, **characterized in that** with only the braking effect of the additional brake system, by adjusting the supporting force *F_sup* (9) each pedal force F_ped (3) can be set less than or equal to a limit value of the pedal force F_ped,max, wherein the limit value of the pedal force F_ped,max arises according to *F_ped,max = F_ spring1 + F_ spring2.*

12. Device for controlling a controllable brake booster (1) which is part of a brake system of a motor vehicle and comprises an input element (2) to activate the brake system, wherein the brake booster (1) can apply a supporting force (F_sup, 9) acting on an output element (6) of the brake booster (1), wherein the control takes place such that by means of the brake booster (1) a pedal force (F_ped, 3) which acts on the input element (2) is set;

    **characterized in that** a first elastic element (5) is arranged between the input element (2) and a booster body (4) of the controllable brake booster (1), wherein the first elastic element (5) is supported on its one side on a shaped-out formation of the input element (2) and on its other side on the booster body (4) and is a first spring (5), and a second elastic element (8) is arranged between the output element (6) of the controllable brake booster (1) and a master cylinder (7), wherein the second elastic element (8) is supported on its one side on the brake master cylinder (7) and on its other side on a guide part (6) of the output element (6) and is a second spring (8), and the control takes place such that the pedal force (F_ped, 3) depends on an effect of the first and/or second spring (8),
    wherein force can be applied to the output element (6) via a reaction plate (21), which is in contact with or in fixed connection to the guide part (6) of the output element (6), by means of the input element (2) and by means of the booster body (4), which is present in contact with the reaction plate (21).

13. Device according to Claim 12, **characterized in that** an idle travel (10) dependent on an operating mode of the brake booster (1) is provided between the input element (2) and the output element (6), and the control takes place such that when the idle travel (10) is overcome, the controllable brake booster (1) applies a supporting force (F_sup, 9), by means of which the pedal force (F_ped, 3) is set.

14. Device according to Claim 13, **characterized in that** the controllable brake booster (1) is part of a hydraulic partial brake system (13) of a total brake system which as well as the hydraulic partial brake system (13) has an additional partial brake system, and the control takes place such that the brake booster (1) applies a supporting force (F_sup, 9) which counters a change in the pedal force (F_ped, 3), wherein the change in the pedal force (F_ped, 3) is provoked by adapting a braking effect of the hydraulic partial brake system (13) to a change in a braking effect of the additional partial brake system.

15. Controllable brake booster (1) which is part of a brake system of a motor vehicle and has an input element (2) to activate the brake system, wherein the brake booster (1) can apply a supporting force (F_sup, 9) acting on an output element (6) of the brake booster (1), with a device according to any of Claims 12 to 14.

**Revendications**

1. Procédé de fonctionnement d'un servofrein réglable (1) d'une installation de freinage d'un véhicule automobile,

le servofrein comportant un élément d'entrée (2) destiné à actionner l'installation de freinage,
une force de pédale (F_ped, 3), qui agit sur l'élément d'entrée (2), étant réglée par le fonctionnement du servofrein réglable (1),
**caractérisé en ce que**
un premier élément élastique (5) est disposé entre l'élément d'entrée (2) et un corps amplificateur (4) du servofrein réglable (1), le premier élément élastique (5) venant en appui, sur un côté, sur une partie saillante de l'élément d'entrée (2) et, de l'autre côté, sur le corps amplificateur (4) et étant un premier ressort (5), et
un deuxième élément élastique (8) est disposé entre un élément de sortie (6) du servofrein réglable (1) et un cylindre principal (7), le deuxième élément élastique (8) venant en appui, sur un côté, sur le cylindre de frein principal (7) et, de l'autre côté, sur une partie de guidage (6) de l'élément de sortie (6) et étant un deuxième ressort (8), et
la force de pédale (F_ped, 3) dépend d'une action du premier et/ou du deuxième ressort (5, 8) et est réglée à l'aide d'au moins une information relative à la première et/ou la deuxième action,
l'élément de sortie (6) pouvant être sollicité avec une force, par l'intermédiaire d'un disque de réaction (21) présent en appui ou en liaison fixe avec la partie de guidage de l'élément de sortie (6), au moyen de l'élément d'entrée (2) ainsi qu'au moyen du corps amplificateur (4) présent en appui avec le disque de réaction (21).

2. Procédé selon la revendication 1,

une course à vide (10) dépendant d'un mode de fonctionnement du servofrein étant prévue entre l'élément d'entrée (2) et l'élément de sortie (6),
**caractérisé en ce que**
le servofrein réglable (1) est mis en fonctionnement en présence d'une course à vide (10) conformément à sa courbe caractéristique d'origine.

3. Procédé selon la revendication 2,

**caractérisé en ce que**
la force de pédale (F_ped, 3) dépend de la première action du premier ressort (5), notamment par l'intermédiaire d'une force F_spring1 (11) conformément à la relation : F_ped = F_spring1.

4. Procédé selon la revendication 1 ou 3,

une course à vide (10) dépendant d'un mode de fonctionnement du servofrein (1) étant prévue entre l'élément d'entrée (2) et l'élément de sortie (6),
le servofrein (1) pouvant exercer une force d'assistance (F_sup, 9), agissant sur un élément de sortie (6),
**caractérisé en ce que**
lorsque la course à vide (10) est surmontée, le servofrein (1) réglable est mis en fonctionnement de façon à régler la force de pédale (F_ped, 3) par réglage de la force d'assistance (F_sup, 9).

5. Procédé selon la revendication 4,

**caractérisé en ce que**
la force d'assistance (F_sup, 9) est réglée par le fonctionnement du servofrein (1) de sorte que la force de pédale (F_ped, 3) agissant sur l'élément d'entrée (2) prenne une valeur prescrite.

**6.** Procédé selon la revendication 5,

   **caractérisé en ce que**
   la valeur prescrite pour la force de pédale (F_ped, 3) dépend d'une course de déplacement (12) de l'élément d'entrée (2), notamment sous la forme d'une courbe caractéristique.

**7.** Procédé selon au moins une des revendications précédentes,

   le servofrein réglable (1) faisant partie d'un système de freinage partiel hydraulique (13) d'une installation de freinage totale,
   l'installation de freinage totale comportant outre le système de freinage partiel hydraulique (13) un système de freinage partiel supplémentaire,
   le servofrein (1) pouvant exercer une force d'assistance (F_sup, 9) agissant sur l'élément de sortie (6),
   **caractérisé en ce que**
   une variation de la force de pédale (F_ped, 3) est contrebalancée par le réglage de la force d'assistance (F_sup, 9),
   la variation de la force de pédale (F_ped, 3) étant provoquée par l'adaptation d'une action de freinage du système de freinage partiel hydraulique (13) à une variation d'une action de freinage du système de freinage partiel supplémentaire.

**8.** Procédé selon la revendication 7,

   **caractérisé en ce que**
   l'adaptation de l'action de freinage se produit de manière à maintenir constante une action de freinage totale du système de freinage partiel hydraulique (13) et du système de freinage partiel supplémentaire.

**9.** Procédé selon la revendication 7 ou 8,

   **caractérisé en ce que**
   l'adaptation de l'action de freinage du système de freinage partiel hydraulique (13) est effectuée par un réglage de l'action de freinage qui est indépendant de la force du conducteur, notamment au moyen d'un dispositif d'adaptation (19).

**10.** Procédé selon au moins une des revendications précédentes,

   **caractérisé en ce que**
   la valeur prescrite pour la force de pédale F_ped (3) conformément à la relation : $F\_ped = F\_spring1 + F\_spring2 + F\_hyd - F\_sup$ dépend de l'action du premier ressort (5) F_spring1, de l'action du deuxième ressort (8) F_spring2, d'une force F_hyd (15) ainsi que de la force d'assistance $F\_sup$ (9) et est réglée à l'aide d'au moins une information relative à ces grandeurs.

**11.** Procédé selon la revendication 10,

   **caractérisé en ce que**
   en cas d'action de freinage unique du système de freinage supplémentaire, chaque force de pédale F_ped (3) peut être réglée, par réglage de la force d'assistance $F\_sup$ (9), de manière à être inférieure ou égale à une valeur limite de la force de pédale F_ped,max,
   la valeur limite de la force de pédale F_ped,max étant obtenue conformément à $F\_ped,max = F\_spring1 + F\_spring2$.

**12.** Dispositif de commande d'un servofrein réglable (1), qui fait partie d'une installation de freinage d'un véhicule automobile, qui comporte un élément d'entrée (2) destiné à actionner l'installation de freinage,

   le servofrein (1) pouvant exercer une force d'assistance (F_sup, 9) agissant sur l'élément de sortie (6) du servofrein (1),
   la commande se produisant de manière à régler, au moyen du servofrein (1), une force de pédale (F_ped, 3) qui agit sur l'élément d'entrée (2),
   **caractérisé en ce que**

un premier élément élastique (5) est disposé entre l'élément d'entrée (2) et un corps amplificateur (4) du servofrein (1) réglable, le premier élément élastique (5) venant en appui, sur un côté, sur une partie saillante de l'élément d'entrée (2) et, de l'autre côté, sur le corps amplificateur (4) et étant un premier ressort (5), et

un deuxième élément élastique (8) est disposé entre un élément de sortie (6) du servofrein réglable (1) et un cylindre principal (7), le deuxième élément élastique (8) venant en appui, sur un côté, sur le cylindre de frein principal (7) et, de l'autre côté, sur une partie de guidage (6) de l'élément de sortie (6) et étant un deuxième ressort (8), et

la commande se produisant de manière à ce que la force de pédale (F_ped, 3) dépende d'une action du premier et/ou du deuxième ressort (8),

l'élément de sortie (6) pouvant être sollicité avec une force, par l'intermédiaire d'un disque de réaction (21) présent en appui ou en liaison fixe avec la partie de guidage (6) de l'élément de sortie (6), au moyen de l'élément d'entrée (2) ainsi qu'au moyen du corps amplificateur (4) présent en appui avec le disque de réaction (21).

13. Dispositif selon la revendication 12,

**caractérisé en ce que**

une course à vide (10) dépendant d'un mode de fonctionnement du servofrein (1) est prévue entre l'élément d'entrée (2) et l'élément de sortie (6) et

la commande se produit de manière à ce que, lorsque la course à vide (10) est surmontée, le servofrein (1) réglable exerce une force d'assistance (F_sup, 9) au moyen de laquelle la force de pédale (F_ped, 3) est réglée.

14. Dispositif selon la revendication 13,

**caractérisé en ce que**

le servofrein réglable (1) fait partie d'un système de freinage partiel hydraulique (13) d'une installation de freinage totale, qui comporte outre le système de freinage partiel hydraulique (13) un système de freinage partiel supplémentaire,

et la commande se produit de manière à ce que le servofrein (1) exerce une force d'assistance (F_sup, 9) qui contrebalance une variation de la force de pédale (F_ped, 3),

la variation de la force de pédale (F_ped, 3) étant provoquée par l'adaptation d'une action de freinage du système de freinage partiel hydraulique (13) à une variation d'une action de freinage du système de freinage partiel supplémentaire.

15. Servofrein (1) réglable, qui fait partie d'une installation de freinage d'un véhicule automobile qui comporte un élément d'entrée (2) destiné à actionner l'installation de freinage,

le servofrein (1) pouvant exercer une force d'assistance (F_sup, 9) agissant sur un élément de sortie (6) du servofrein (1),

ledit servofrein réglable comprenant un dispositif selon une des revendications 12 à 14.

**Fig. 1**

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007016136 A1
- DE 19950029 A1
- US 6007160 A
- US 20090261649 A1
- US 20110178687 A1
- DE 10319663

**In der Beschreibung aufgeführte Nicht-Patentliteratur**

- Kraftfahrtechnisches Taschenbuch. BOSCH, Vieweg Verlag